# EUROPÄISCHE PATENTANMELDUNG

(11) **EP 4 844 506 A1**
(43) Veröffentlichungstag der Anmeldung: **25.11.2026**
(21) Anmeldenummer: 25178505.1
(22) Anmeldetag: 23.05.2025
(51) Int. Cl.: G05B 19/409, G05B 19/418

(54) **SYSTEM ZUM STEUERN UND KONTROLLIEREN EINER INDUSTRIELLEN MASCHINE, EIN VERFAHREN ZUM BETRIEB EINES SYSTEMS, UND EIN VERFAHREN ZUM DEFINIEREN VON DATEN FÜR EIN SYSTEM**

(71) Anmelder: Telsonic Holding AG, 9552 Bronschhofen (CH)
(72) Erfinder: Ayabakan, Mustafa, 9545 Wängi (CH)
(74) Vertreter: Hepp Wenger Ryffel AG

(57) **Zusammenfassung**

Die Erfindung richtet sich auf ein System (101) zum Steuern und Kontrollieren mindestens einer industriellen Maschine (6) mit Hilfe eines grossen Sprachmodells (2). Das System umfasst eine Eingabeschnittstelle (3) zum Empfangen einer Eingabe (31) in natürlicher Sprache von mindestens einem Akteur. Das System umfasst zudem ein Kommunikationsmodul (4), das für eine insbesondere bidirektionale Kommunikation mit der Eingabeschnittstelle (3) und mindestens einer Maschinensteuerung (5) verbunden oder verbindbar ist. Das Kommunikationsmodul (4) umfasst eine Verbindungsschnittstelle zu dem grossen Sprachmodell (2) und ist dazu konfiguriert, über ein Protokoll, insbesondere ein Modell-Kontext-Protokoll, auf Basis einer Eingabe (31) in natürlicher Sprache über die Eingabeschnittstelle (3) einen Steuerbefehl (51) zu generieren, der dazu konfiguriert ist, mindestens einen Betriebsparameter (61) für die Maschine (6) anzupassen und/oder einen Ausgabebefehl (52) zu generieren, der dazu konfiguriert ist, mindestens einen Zustandsparameter (62) der Maschine (6) auszugeben und/oder zu einer Ausgabe zu verarbeiten und diese Ausgabe auszugeben.

## Beschreibung

Die Erfindung betrifft ein System zum Steuern und Kontrollieren einer industriellen Maschine, insbesondere einer Ultraschallbearbeitungsmaschine, mit Hilfe eines grossen Sprachmodells, ein Verfahren zum Betrieb eines Systems, und ein Verfahren zum Definieren von Daten eines Systems gemäss den unabhängigen Ansprüchen.

Die Erfindung ist anwendbar im Gebiet der Kontrolle/Steuerung von industriellen Maschinen in der Fertigung, in der Qualitätssicherung/Prüfung, oder der Bearbeitung. Insbesondere ist eine Anwendung eine maschinelle Schnittstellenkommunikation bei der Automatisierung denkbar.

Bisherige Maschinenkommunikation beschränkt sich oftmals auf klassische SPS-Schnittstellen, Mensch-Maschine-Interfaces (HMI), Sensorintegration/-steuerung und vorgegebene Software-Anbindungen (z.B. MES-Systeme). Der Zugang erfolgt überwiegend über strukturierte APIs und/oder proprietäre Protokolle.

Industrielle maschinelle Prozesse sind oftmals kontextabhängig und/oder schwer vorhersehbar, sodass eine Automatisierung einer maschinellen Steuerung/Kontrolle nicht oder nur schwer realisierbar, und/oder besonders komplex ist. Insbesondere durch mangelnde Datenqualität - also insbesondere unverlässliche, unübersichtliche, und/oder verunreinigte Daten - und unzureichende Schnittstellen zur zuverlässigen Einbindung dieser Daten, wird die Automatisierung erschwert. Somit ist die existierende Automatisierung im maschinellen Kontext oftmals komplex, ressourcenaufwendig, wartungsintensiv, weist hohe Betriebskosten, und/oder Anfangsinvestitionen auf. Zudem führt eine maschinelle Automatisierung oftmals zu starren Prozessen, die nicht oder nur aufwendig angepasst werden können. Somit birgt die Automatisierung oft Pfadabhängigkeiten und/oder Abhängigkeit der Prozesse von Unternehmen, die proprietäre Automatisierungslösungen anbieten, so dass die strategische Flexibilität beeinträchtigt werden kann.

Zudem werden solche Automatisierungen oftmals nicht durchgeführt, da unter anderem, oftmals nur geringfügige Verbesserungen ermöglicht werden, ein hoher Implementierungsaufwand erforderlich ist, und lediglich eine domänenspezifische Lösung zur Verfügung gestellt wird, die keine universelle Anwendung ermöglicht. Zudem führt fehlende Akzeptanz, etwa bedingt durch unverhältnismässig hohen Schulungsaufwand, mangelnde Vorhersagbarkeit/Reproduzierbarkeit für kritische Prozessschritte, Fragmentierung, mangelnde/unzureichende Standards, und/oder kurze Lebenszyklen der KI-Modelle, dazu, dass KI-Automatisierung oftmals keine Anwendung in industriellen Prozessen findet.

Es ist daher die Aufgabe der Erfindung diese und weitere Nachteile des Stands der Technik zu überwinden und ein System zum Steuern und Kontrollieren einer industriellen Maschine zur Verfügung zu stellen, welches insbesondere einfach, effizient und effektiv, ressourcenschonend, skalierbar/erweiterbar, flexibel anpassbar, zuverlässig, benutzerfreundlich, und kosteneffizient ist. Insbesondere soll eine industrielle Automatisierung gestützt durch Künstliche-Intelligenz (KI-) Agenten und grosse Sprachmodelle (LLMs) ermöglicht werden. Es soll eine vereinfachte, vielseitige und effiziente Kommunikation zwischen der Maschinensteuerung und einem Akteur ermöglicht werden.

Diese Aufgabe wird durch ein erfindungsgemässes System zum Steuern und Kontrollieren mindestens einer industriellen Maschine, insbesondere mindestens einer Ultraschallbearbeitungsmaschine, vorzugsweise mindestens einer Ultraschallschweissmaschine, mit Hilfe eines grossen Sprachmodells gelöst. Das System umfasst eine Eingabeschnittstelle zum Empfangen einer Eingabe in natürlicher Sprache von mindestens einem Akteur, insbesondere einem KI-Agenten und/oder einem Nutzer. Das System umfasst zudem ein Kommunikationsmodul, das für eine insbesondere bidirektionale Kommunikation mit der Eingabeschnittstelle und mindestens einer Maschinensteuerung verbunden oder verbindbar ist. Das Kommunikationsmodul umfasst eine Verbindungsschnittstelle zu dem grossen Sprachmodell. Das Kommunikationsmodul ist zudem dazu konfiguriert über ein Protokoll, insbesondere ein Modell-Kontext-Protokoll (MCP), auf Basis einer Eingabe in natürlicher Sprache über die Eingabeschnittstelle einen Steuerbefehl und/oder einen Ausgabebefehl zu generieren. Der Steuerbefehl ist dazu konfiguriert mindestens einen Betriebsparameter für die Maschine anzupassen. Der Ausgabebefehlt ist dazu konfiguriert mindestens einen Zustandsparameter der Maschine auszugeben.

Die mindestens eine industrielle Maschine kann eine Fertigungs-, Bearbeitungs-, und/oder Prüfungsmaschine, insbesondere eine Maschine zur Qualitätssicherung, sein. Die Ultraschallbearbeitungsmaschine(n) können Ultraschallschweissmaschinen, aber auch Ultraschallreinigungs- oder Siebmaschinen sein.

Die Verwendung eines solchen Protokolls, insbesondere MCP, ermöglicht eine simplere Steuerung/Kontrolle der Maschine durch KI-Agenten/LLMs. Somit kann die Handhabung und der Betrieb mit KI-Unterstützung erfolgen, sodass keine/weniger Schulungen und Programmieraufwand notwendig sind zur Kontrolle/Steuerung der industriellen Maschine.

Das Kommunikationsmodul kann dazu konfiguriert sein, mit dem Protokoll über die Verbindungsschnittstelle mit dem grossen Sprachmodell zumindest teilweise/vollständig über eine standardisierte Datenstruktur kommunizieren.

Das Kommunikationsmodul kann dazu konfiguriert sein, über ein Protokoll via eine oder mehrere API-Schnittstellen auf Basis der Eingabe in natürlicher Sprache zu kommunizieren.

Dieses System erlaubt eine Vereinfachung und Automatisierung der Kommunikation, Kontrolle, und Steuerung der Maschinensteuerung mit KI-gestützten Tools, d.h. einem KI-Agenten und/oder einem LLM, durch die Verwendung eines Protokolls, insbesondere ein Modell-Kontext-Protokoll/"model-context-protocol", als einen standardisierten Kommunikationsrahmen. Damit sind die relevanten Informationen einem Akteur, etwa einem KI-Agent, besser zugänglich und können effektiver und effizienter in den zweckgebundenen Kontext eingebunden werden, sodass eine funktionalere Kommunikation zwischen Akteur und der der Maschinensteuerung ermöglicht wird.

Das LLM und/oder der KI-Agent können dazu konfiguriert sein, auf eine externe Breitbandnetze, Cloud-, und/oder Internetressourcen zurückzugreifen oder diese zu nutzen.

Das System kann dazu konfiguriert sein, dass zwischen der Eingabeschnittstelle, dem Kommunikationsmodul, der Maschinensteuerung und/oder über der Verbindungsschnittstelle zum LLM einen "Initialization/Discovery"-Schritt ausgeführt wird, indem Informationen, insbesondere Fähigkeiten, Versionen, und der Datenstruktur, ausgetauscht werden.

Das System kann das LLM und/oder den KI-Agenten, der mit der Eingabeschnittstelle verbunden oder verbindbar ist, umfassen. Ein KI-Agent kann ein LLM umfassen, mindestens eine weitere zusätzliche Schnittstelle aufweisen, etwa zur Entgegennahme von Informationen von Sensoren und insbesondere Kontrolle/Steuerung der Maschine anhand dieser sensorischen Wahrnehmung.

Ein KI-Agent kann "stateful" sein, also ein Langzeitgedächnis aufweisen, und/oder dazu konfiguriert sein, selbstständig zu handeln, und insbesondere externe Prozesse zu steuern.

Dies ermöglicht eine einfache und optimierte Abstimmung der KI-Komponente mit den Komponenten des Systems zur spezialisierten Steuerung/Regelung der Maschine, sodass insbesondere Offline-Lösungen des Systems mit KI-Komponente(n) umgesetzt werden können, die vorzugsweise individuell für diese Steuerung/Regelung trainiert wurden.

Das LLM, welches über die Verbindungsschnittstelle mit dem Kommunikationsmodul verbunden ist, kann ein Bestandteil eines, insbesondere eines weiteren, KI-Agenten sein.

Die Eingabeschnittstelle, das Kommunikationsmodul, die Maschinensteuerung, und insbesondere das LLM und/oder der KI-Agent können lokal miteinander verbunden oder verbindbar sein, und insbesondere ausschliesslich lokalen Datenaustausch unterstützen.

Der Begriff "lokal" bezieht sich hier auf alle Komponenten, Module oder Datenspeicher, die physisch innerhalb der Systemgrenzen angeordnet sind und ausschliesslich über interne Verbindungen arbeiten, ohne auf externe Breitbandnetze, Cloud-, und/oder Internetressourcen zurückzugreifen oder diese zu nutzen.

Sowohl die Eingabeschnittstelle, das Kommunikationsmodul mit der Verbindungsschnittstelle, und/oder die Maschinensteuerung können ein integriertes lokales System bilden, insbesondere innerhalb eines gemeinsamen Gehäuses angeordnet sein.

Das System kann die Maschinensteuerung umfassen, die mit der Maschine zur Datenübertragung verbunden oder verbindbar ist. Das System kann vorzugsweise mindestens eine Maschine umfassen, insbesondere eine Vielzahl von Maschinen, vorzugsweise eine Vielzahl von Ultraschallbearbeitungsmaschinen.

Dies ermöglicht eine optimale Abstimmung der Maschinensteuerung und Maschinen mit dem System und eine optimierte Systemintegration. Im Speziellen kann somit eine einfache und aufeinander abgestimmte Datenstruktur zur Kommunikation der Maschinensteuerung und dem System über das Protokoll auf Basis der Eingabe ermöglicht werden. Eine solche Abstimmung/Systemintegration ist besonders einfach skalierbar und ermöglicht eine einfache und zuverlässige Steuerung von einer Vielzahl von Maschinen/-steuerungen.

Die Maschinensteuerung kann räumlich von der Maschine beabstandet angeordnet sein. Insbesondere ist die Maschinensteuerung eine gemeinsame Maschinensteuerung, die mit einer Vielzahl von Maschinen zur Datenübertragung verbunden oder verbindbar ist.

Durch eine räumliche Trennung der Maschinen und der Maschinensteuerung wird eine zentralisiertere Steuerung ermöglicht, die Komplexität und benötigte Wartung verringert, und insbesondere die Nutzungs- und Herstellungskosten reduziert.

Das System kann eine Schnittstelle für eine Benutzeroberfläche umfassen, die dazu konfiguriert ist, die Eingabe in natürlicher Sprache über die Eingabeschnittstelle zu empfangen und/oder eine Ausgabe, insbesondere den mindestens einen Zustandsparameter der industriellen Maschine, darzustellen und/oder auszugeben. Das System kann optional eine Anzeigevorrichtung zur Darstellung der Benutzeroberfläche umfassen.

Dies ermöglicht eine vereinfachte Nutzerinteraktion mit dem System, etwa für visuelles Feedback als Ausgabe der Zustandsparameter/verarbeiteten Ausgabe oder eine direkte Anpassung der Betriebsparameter, auf Basis der Eingabe in natürlicher Sprache.

Die Benutzeroberfläche kann dazu konfiguriert sein, auditive und/oder visuelle Signale auszugeben, die indikativ für einen Zustandsparameter/eine Ausgabe sind. Die Benutzeroberfläche kann eine graphische Benutzeroberfläche sein, insbesondere zur Darstellung auf einem Bildschirm, optional auf einem Touchscreen.

Das System kann dazu konfiguriert sein, zumindest einen Betriebs- und/oder Zustandsparameter nach einem Kommunikationsstandard, insbesondere einer service-orientierten Architektur, auszugeben, entgegenzunehmen, zu bearbeiten, und/oder abzulegen. Optional ist das System dazu konfiguriert diesen Betriebs- und/oder Zustandsparameter über das Protokoll, insbesondere das Modell-Kontext-Protokoll, über die Verbindungsschnittstelle zum LLM und/oder an den KI-Agenten auszugeben.

Der Kommunikationsstandard kann etwa ein "Open Platform Communication Unified Architexture" (OPC UA) Kommunikationsstandard sein. Ein solcher Kommunikationsstandard ermöglicht eine zuverlässige plattformübergreifende Kommunikation der Betriebs- und/oder Zustandsparameter. Zudem kann insbesondere eine verbesserte Kommunikation der industriellen Maschine mit dem LLM/KI-Agenten ermöglicht werden, sodass das System leichter in nativen Systemen funktional eingebunden werden kann.

Das System kann dazu konfiguriert sein, dass eine Vielzahl der Betriebs- und/oder Zustandsparameter zeitlich beabstandet voneinander, insbesondere regelmässig zeitlich beabstandet voneinander, automatomatisiert über das Protokoll, insbesondere das Modell-Kontext-Protokoll, an das LLM übermittelt werden. Insbesondere ist das System zudem dazu konfiguriert, dass diese Vielzahl der Betriebs- und/oder Zustandsparameter nach dem Kommunikationsstandard wie zuvor beschrieben zeitlich beabstandet voneinander ausgegeben, entgegengenommen, bearbeitet und/oder abgelegt werden.

Dies ermöglicht eine kontinuierliche und automatisierte Protokollierung der Betriebs- und/oder Zustandsparameter durch das LLM. Somit kann die Überwachung, eine Qualitätssicherung, und/oder eine Prozessoptimierung der Betriebs- und/oder Zustandsparameter verbessert werden. So kann etwa eine zeitliche Änderung dieser Parameter leichter und/oder automatisiert detektiert werden.

Das System kann dazu konfiguriert sein, dass die Ausgabe des Zustandsparameters oder eine aus dem Zustandsparameter hergeleiteten Ausgabe in Echtzeit erfolgt.

Dies ermöglicht ein schnelleres Extrahieren der relevanten Zustandsparameter/Ausgaben und somit auch effizientere und bedarfsorientiertere Anpassung der Kontrolle/Steuerung der industriellen Maschine(n).

Das System kann einen zumindest teilweise automatisierten Betriebsmodus umfassen, der dazu konfiguriert ist, den Steuerbefehl und/oder den Ausgabebefehl, insbesondere eine Vielzahl von Steuerbefehlen und/oder Ausgabebefehlen, selbsttätig ohne eine Eingabe in natürlicher Sprache zu generieren. Dieser Steuerbefehl und/oder Ausgabebefehl kann insbesondere generiert werden, wenn der Zustandsparameter einen vordefinierten Wert überschreitet und/oder unterschreitet, vorzugsweise in Abhängigkeit eines Inhalts eines anderen Zustandsparameters, ein Verhältnis zueinander oder eine Differenz von zwei Zustandsparametern eine stärkere oder geringere Abweichung aufweist als ein vordefinierter Referenzwert, und/oder eine Änderungsrate des Zustandsparameters sich über einen Zeitraum stärker ändert als eine vordefinierte Änderungsgeschwindigkeit.

Dies ermöglicht die Einbindung und Verwendung von Regelschleifen, ohne zwingend auf Eingaben angewiesen zu sein, sodass insbesondere automatisch eine unerwünschte Veränderung eines Zustandsparameters und/oder mehrerer Zustandsparameter zueinander Steuer- und/oder Ausgabebefehle bewirken können. Somit kann etwa einer solchen unerwünschten Veränderung durch die Steuerbefehle automatisiert entgegengewirkt werden, bevor diese die Funktionsweise der Maschine beeinträchtigen. Zudem wird somit eine deterministische Steuerung/Kontrolle der Zustandsparameter ermöglicht.

Das System kann dazu konfiguriert sein, dass der vordefinierte Wert, der andere Zustandsparameter, der vordefinierte Referenzwert, und/oder die Änderungsgeschwindigkeit von dem Akteur/LLM definiert werden können, insbesondere durch Empfang einer Eingabe in die Eingabeschnittstelle durch den Akteur.

Die Daten des Modell-Kontext-Protokolls können eine Datenstruktur aufweisen, welche Ressourcendaten umfasst, die den Betriebsparameter und/oder Zustandsparameter mindestens einer der Maschinen enthalten. Die Datenstruktur umfasst zudem Werkzeugdaten, die eine Verarbeitungsanweisung für mindestens einen der Betriebsparameter und/oder Zustandsparameter der Maschine angeben. Zudem enthält die Datenstruktur Promptdaten, die eine Interaktionsaufforderung zur Bearbeitung eines oder mehrerer Betriebsparameter, Zustandsparameter, und/oder Werkzeugdaten der mindestens einen Maschine umfassen.

Dies ermöglicht eine standardisierte, gemeinsame, und leicht zu implementierende Datenstruktur, die eine verbesserte Kommunikation mit dem KI-Agenten/dem LLM und der Maschinensteuervorrichtung zur Steuerung/Kontrolle der Maschine ermöglicht.

Indem das Modell-Kontext-Protokoll eine solche Datenstruktur aufweist, die spezifisch auf die Betriebs- und Zustandsparameter der Maschine, insbesondere einer Vielzahl von Maschinen, angepasst ist, wird eine spezialisierte modell-, anwendungs-, und akteurgesteuerte Kontrolle/Steuerung der Maschine durch das System ermöglicht.

Das System kann eine teilweise oder vollständig identische Datenstruktur des Protokolls zur Generierung von Steuer- und/oder Ausgabebefehlen für eine Vielzahl von industriellen Maschinen umfassen, insbesondere eine Datenstruktur wie zuvor beschrieben.

Somit kann eine gemeinsame, standardisierte, und skalierbare Architektur für die KI-Agent/LLM Integration zur Steuerung/Kontrolle einer Vielzahl von Maschinen implementiert werden.

Der Betriebsparameter kann zumindest aus einem der folgenden bestehen oder einen der folgenden umfassen: einen Betriebsmodus, eine Verfahrensanweisung zum Durchführen von zumindest einem Steuerbefehl und/oder Ausgabebefehl, eine Kompressionskraft für einen Schweissprozess, eine Amplitude für einen Schweissprozess, eine Zeit für einen Schweissprozess, eine aktive oder passive Verfahrensanweisung, eine Losgrösse, eine Planzeit, eine Wartungsanweisung, eine Kundenzuordnung und/oder Produktzuordnung, Kundendaten, eine Artikelnummer, einen Liefertermin, eine Auftraggeberinformation, ein Zugriffsrecht des KI-Agenten, eine vordefinierte Rolle, insbesondere eine Berechtigungs und/oder Funktionszuweisung des Akteurs, eine Einschränkung, insbesondere einen Begrenzungswert des Zustandsparameters, einen Token, insbesondere einen einen Auth-Token, einen globalen Steuer- und/oder Ausgabebefehl für eine Vielzahl von Maschinen, und/oder eine Kommunikation mit einem Produktionsleitsystem, einem EPR System, einer externen Datenplattform, und/oder einem Datenabgleichstatus.

Ein solcher Betriebsparameter ermöglicht eine spezifisch auf die industrielle Maschine angepasste, wiederholbare, und einfache Steuerung der industriellen Maschine durch den Steuerbefehl/die Steuerbefehle, die leicht in die Verfahrensanweisungen implementiert werden können.

Aktive Verfahrensanweisungen sind vom Akteur/LLM direkt definierte Verfahrensanweisungen - also eine aktive Steuerung der Maschine, wie einen direkt durchzuführenden Steuerbefehl, der von der Maschine ausgeführt wird. Passive Verfahrensanweisungen können zwar ebenfalls vom Akteur/LMM definiert werden, werden jedoch nicht direkt durch eine aktive Steuerung der Maschine ausgeführt, sondern ergeben sich direkt aus den inneren Bedingungen der Maschine, d.h. den Zustandsparametern der Maschine, etwa wenn eine vordefinierter Schwellenwert überschritten wird. Auf diese Weise können etwa die zuvor beschriebenen Regelschleifen zur selbsttätigen Generierung von einem Steuer- und/oder Ausgabebefehl implementiert werden.

Die Kundenzuordnung und/oder die Produktzuordnung kann etwa eine Nummer, ein Foto/graphische Darstellung, ein QR-/Barcode, oder einen Namen umfassen.

Die vordefinierte Rolle bezeichnet eine definierte Berechtigungsstufe und/oder Funktionszuweisung des Akteurs, z.B. "Operator", "Supervisor", "Service-Techniker", "Admin" oder "System-KI". Die Berechtigung kann somit angepasst sein, dass etwa nur bestimmte Betriebs- und/oder Zustandsparameter angepasst werden können.

Die Einschränkung/"Constraint" kann technische, sicherheitsrelevante oder organisatorische Begrenzungen umfassen, z.B. maximale zulässige Temperatur, begrenzte Bedienzeit, keine Befehle ausserhalb von Wartungszeiten, und/oder Zugriffsbeschränkungen für definierte Nutzergruppen.

Ein globaler Steuer- und/oder Ausgabebefehl bezeichnet etwa eine einheitlich auf mehrere Maschinen anwendbare Steueranweisung, z.B. zum gleichzeitigen Start/Stopp aller Linien, zur Umstellung auf ein neues Produktrezept, oder zur zentralen Rückmeldung an ein Leitsystem.

Der Zustandsparameter kann zumindest einen der folgenden umfassen oder daraus bestehen: einen Betriebsmodus, eine Laufzeit der Maschine, einen Fehlerstatus, eine Kompressionskraft für einen Schweissprozess, eine Amplitude für einen Schweissprozess, eine Zeit für einen Schweissprozess, einen Produktionsbericht, eine Gutteilzahl oder Ausschusszahl, eine Logdatei, eine Gesamtanlageneffektivität, einen Servicestatus, Kalibrierdaten, einen Versionsstand, einen Auftragsfortschritt, eine Seriennummer, eine Parameterhistorie, einen Qualitätsstatus, einen Ausschussgrund, eine Gutteilerfassung, Trenddaten zur Prozessqualität, eine Maschinenpark-Übersicht, eine Statusverteilung, eine aktuelle Frequenz, Leistung, Temperatur, und/oder Position, einen Vergleich mit einer vorhergehenden Verfahrensanweisung, eine Änderungsdokumentation, einen Datenabgleichstatus, eine Losgrösse, eine Planzeit, einen anstehenden Wartungstermin, eine Arbeitsanweisungscheckliste, eine Bedienungsanleitung, ein Schulungsvideo, eine Komponentendokumentation, eine Kundenzuordnung und/oder Produktzuordnung, Kundendaten, eine Artikelnummer, einen Liefertermin, eine Auftraggeberinformation, ein Zugriffsrecht des KI-Agenten, eine vordefinierte Rolle, insbesondere eine Berechtigungsstufe und/oder Funktionsweise des Akteurs, und/oder eine Einschränkung.

Dieser Zustandsparameter ermöglicht eine spezifisch auf die industrielle Maschine angepasste, wiederholbare, und einfache Kontrolle der industriellen Maschine durch den Ausgabebefehl/die Ausgabebefehle.

Ein weiterer Aspekt der Erfindung richtet sich auf ein Verfahren zum Betrieb eines Systems, insbesondere eines zuvor beschriebenen Systems, zum Steuern und Kontrollieren mindestens einer industriellen Maschine, insbesondere mindestens einer Ultraschallbearbeitungsmaschine, vorzugsweise mindestens einer Ultraschallschweissmaschine, mit Hilfe eines grossen Sprachmodells. Das Verfahren umfasst das Empfangen einer Eingabe in natürlicher Sprache von mindestens einem Akteur, insbesondere einem KI-Agenten und/oder einem Nutzer. Das Verfahren umfasst zudem das Generieren eines Steuerbefehls, um einen Betriebsparameter für die Maschine anzupassen, und/oder eines Ausgabebefehls, um mindestens einen Zustandsparameter der Maschine auszugeben und/oder zu einer Ausgabe zu verarbeiten. Das Generieren erfolgt durch eine Verarbeitung der Eingabe über ein Protokoll, insbesondere ein Modell- Kontext-Protokoll, und ein LLM. Das Verfahren umfasst zudem eine Ausgabe des Steuerbefehls, insbesondere an eine Maschinensteuerung, und/oder des Ausgabebefehl, insbesondere über eine Benutzeroberfläche.

Oftmals wird geschultes Personal benötigt, um Nutzereingaben zur automatisierten Steuerung/Kontrolle von Maschinen zu machen. Somit wird von einer Automatisierung abgesehen wird, da Automatisierungseinsparungen durch zusätzliche benötigte Schulung zunichte gemacht werden. Zudem ist eine Automatisierung zum Steuern und Kontrollieren einer Maschine ist oftmals komplex, da eine Schnittstellen-Integration umständlich und zeitaufwendig ist.

Im Stand der Technik wird häufig von möglichen Automatisierungen von industriellen Maschinen, insbesondere durch eine Optimierung der Datenstruktur, abgesehen, da eine Null-Fehler-Toleranz für komplexe Verfahrensabläufe von Maschinen, eine hohe Anfangshürde und -investition, mangelnde Kompatibilität mit existierenden Schnittstellen, i.e. Altlasten, uneinheitliche/unklare Branchenstandards, und fehlendes Know-how vorliegen.

Es ist daher die Aufgabe eines weiteren Aspekts der vorliegenden Erfindung, diese und andere Nachteile des Stands der Technik zu überwinden. Insbesondere soll die Erfindung ein Verfahren zur Verfügung stellen, dass das Steuern und Kontrollieren von industriellen Maschinen vereinfacht, skalierbar macht, flexibel anpassbar, zuverlässig, benutzerfreundlich, und kosteneffizient ist. Dies wird durch ein Verfahren zum Definieren von Daten für ein System zum Steuern und Kontrollieren mindestens einer industriellen Maschine, insbesondere wie zuvor beschrieben, gelöst. Die Datenstruktur des Modell-Kontext-Protokolls wird durch eine Nutzereingabe, insbesondere über eine Eingabeschnittstelle definiert. Das Verfahren umfasst das Definieren eines Betriebs- und/oder Zustandsparameters der Maschine als Ressourcendaten, einer Verarbeitungsanweisung für mindestens einen der Betriebsparameter und/oder der Zustandsparameter der Maschine als Werkzeugdaten, und einer Interaktionsaufforderung zur Bearbeitung einer oder mehrerer Betriebsparameter, Zustandsparameter, und/oder Werkzeugdaten der mindestens einen industriellen Maschine als Promptdaten.

Weitere Ausführungsformen der Erfindung und Verbesserungen der beschriebenen Ausführungsformen werden in der folgenden Beschreibung der Ausführungsformen deutlich.

Die Erfindung wird nun unter Bezugnahme auf bestimmte Ausführungsformen und Figuren beschrieben, die zeigen:
- Figur 1:: eine schematische Darstellung eines erfindungsgemässen Systems zum Kontrollieren und Steuern einer Vielzahl von industriellen Maschinen, und
- Figur 2:: eine schematische Darstellung eines erfindungsgemässen Verfahrens zum Definieren von Daten für ein System zum Steuern und Kontrollieren einer industriellen Maschine.

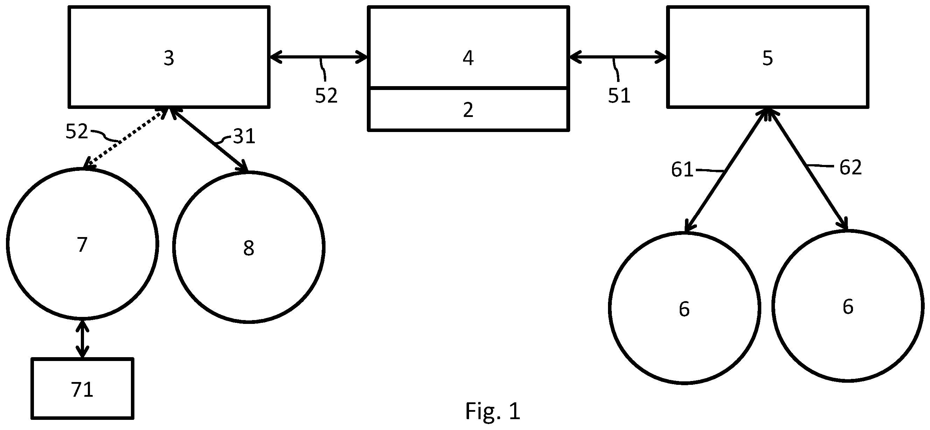

Figur 1 zeigt eine schematische Darstellung eines erfindungsgemässen Systems 101 zum Kontrollieren und Steuern einer Vielzahl von industriellen Maschinen 6.

Das System 101 umfasst eine Eingabeschnittstelle 3 zum Empfangen einer Eingabe 31 in natürlicher Sprache von einem Akteur. Figur 1 zeigt, dass die Eingabe 31 von einem KI-Agenten 8 an die Eingabeschnittstelle 3 übermittelt werden kann, und/oder etwa über eine Benutzeroberfläche 71, die beispielsweise auf einem Bildschirm 7 eines Computers dargestellt wird, über die Eingabeschnittstelle 3 übermittelt werden kann.

Das System 101 umfasst zudem ein Kommunikationsmodul 4, welches für eine bidirektionale Kommunikation mit der Eingabeschnittstelle 3 und einer Maschinensteuerung 5 verbunden ist. Das Kommunikationsmodul 4 weist zudem eine Verbindungsschnittstelle zu einem LLM 2 auf. Dies kann ein eigenständiges LLM 2, ein LLM 2 des KI-Agenten, oder ein LLM 2 eines weiteren KI-Agenten sein. Das LLM 2 in Fig. 1 kann ein lokales LLM 2 sein, welches speziell zur Steuerung von Maschinen 6 trainiert und konfiguriert ist und keinen Zugriff auf externe Netzwerk- und Rechenressourcen aufweist. Alternativ kann es sich um ein externes LLM 2 handeln, welches auf externe Breitbandnetze, Cloud-, und/oder Internetressourcen zugreift.

Das System 101 umfasst zudem die Maschinensteuerung 5 welche zur Steuerung und Kontrolle mit einer Vielzahl von industriellen Maschinen 6 verbunden ist. Figur 1 zeigt exemplarisch lediglich zwei Maschinen 6. Diese Maschinen 6 sind etwa Ultraschallbearbeitungsmaschinen für die industrielle Fertigung. Das System 101 kann jedoch mit unterschiedlichen Maschinentypen verbunden sein, etwa Maschinen zur Fertigung, Bearbeitung, und/oder Prüfung. Die Maschinensteuerung 5 ist konfiguriert, Betriebsparameter 61 der Maschine(n) 6, also etwa eine Kompressionskraft, eine Amplitude, oder eine Zeit für einen Schweissprozess auf Basis eines Steuerbefehls 51 des Kommunikationsmoduls 4 anzupassen. Zudem ist die Maschinensteuerung 5 dazu konfiguriert einen Zustandsparameter 62 der Maschine(n) 6 an das Kommunikationsmodul 4 auszugeben.

Dieser Zustandsparameter 62 kann etwa eine aktuelle Kompressionskraft, eine Amplitude, oder eine Zeit für einen Schweissprozess umfassen.

Die Eingabeschnittstelle 3, das Kommunikationsmodul 4, und die Maschinensteuerung 5 in Fig. 1 sind lokal miteinander verbunden, insbesondere kabellos miteinander verbunden, sodass ein integriertes System 101 zur Verfügung gestellt wird. Die Maschinen 6 in Fig. 1 sind von diesem integrierten System 101 beabstandet angeordnet, und insbesondere kabellos mit diesem verbunden, sodass eine zentralisierte Steuerung/Kontrolle ermöglicht wird.

Sobald die Eingabe 31 über die Eingabeschnittstelle 3 durch einen Akteur, also etwa eine manuelle Nutzereingabe über die Benutzeroberfläche 71 oder eine Eingabe eines KI-Agenten 8 erhalten wurde, wird diese an das Kommunikationsmodul 4 weitergeleitet, anstelle direkt mit einem LLM 2 zu kommunizieren. Das Kommunikationsmodul 4 ist dazu konfiguriert über eine Verbindungsschnittstelle mit einem Modell-Kontext-Protokoll mit dem LLM 2 auf Basis der Eingabe über die Eingabeschnittstelle 3 zu kommunizieren, um den Steuerbefehl 51 und/oder den Ausgabebefehl 52 zu generieren. Dazu werden Daten mit einer vordefinierten Datenstruktur übermittelt, die insbesondere Werkzeugdaten/"Tools", Ressourcendaten/"Resources", und Promptdaten umfasst. Das Protokoll in Fig. 1 weist dieselbe Datenstruktur für das Generieren von Befehlen für die Vielzahl von Maschinen 6 auf, sodass eine zentralisierte Steuerung/Kontrolle mehrerer Maschinen 6 über das System 101 bereitgestellt werden kann. In Fig. 1 wird zwischen dem Kommunikationsmodul 4 und dem LLM 2 des Systems 101 zur Initialisierung Information über die Datenstruktur, Fähigkeiten, und Protokollversion ausgetauscht. Die Datenstruktur beinhaltet etwa die speziell zur Kontrolle/Steuerung der Maschine definierten Ressourcendaten, Werkzeugdaten, und Promptdaten. Somit kann das Kommunikationsmodul 4 und das LLM 2 über ein kompatibles Format, wie etwa JSON-Dateien oder Log-Dateien, Daten einlesen, strukturieren, interpretieren, und kommunizieren. Das LLM 2 kann etwa beispielsweise anhand der Eingabe 31 in natürlicher Sprache über die strukturierte Datenstruktur erkennen, dass bestimmte Ressourcendaten abgefragt werden sollen, etwa durch eine Eingabe 31 von "Wie hoch ist die Frequenz eingestellt?", oder, dass bestimmte Ressourcendaten geändert werden sollen, etwa durch eine Eingabe 31 von "Setze die Frequenz auf 30.000 Hz". Zudem können das Kommunikationsmodul 4 und das LLM 2 somit anhand einer Eingabe 31 mit einer Interaktionsaufforderung zur Bearbeitung eines Betriebs- und/oder Zustandsparameter 61, 62 erkennen, etwa "Erstelle einen OEE-Report" oder "Lege eine Wartung für kommenden Montag an". Auf Basis dieser Daten kann das Kommunikationsmodul 4 mit dem LLM 2 entweder den Steuerbefehl 51 oder den Ausgabebefehl 52 generieren, um die Eingabe 31 zielgerichtet umzusetzen.

Der Steuerbefehl 51 kann etwa einen Betriebsparameter 61, wie etwa die Frequenz einer Sonotrode der Maschine(n) 6 zum Ultraschallschweissen, auf Basis einer zuvor beschriebenen Eingabe 31 über die Maschinensteuerung 5 anpassen. Das System 101 in Fig. 1 ist dazu konfiguriert durch einen Steuerbefehl 51 einzelne Maschinen 6 zu steuern/zu kontrollieren, oder einen globalen Steuerbefehl 51 für eine Vielzahl von Maschinen 6 zu generieren, etwa für ein generellen Produktionsstopp.

Der Ausgabebefehl 52 kann etwa einen Zustandsparameter 62, wie etwa die Frequenz einer Sonotrode der Maschine 6 zum Ultraschallschweissen, auf Basis einer zuvor beschriebenen Eingabe 31 ausgeben oder diesen Zustandsparameter 62 zu einer Ausgabe verarbeiten. Beispielsweise könnte der aktuelle Werte der Frequenz ausgegeben werden, oder etwa darauf hingewiesen werden, dass die verwendete Frequenz in Kombination mit einem weiteren Zustandsparameter 62 nicht geeignet ist. Das System 101 in Fig. 1 ist dazu konfiguriert den Zustandsparameter 62 oder die verarbeitete Ausgabe kann durch die graphische Benutzeroberfläche 71 auszugeben.

Zudem ist das System 101 in Fig. 1 dazu konfiguriert, auf Basis der Eingabe 31 in natürlicher Sprache auf diese Weise Verfahrensanweisungen in einer vordefinierten Reihenfolge und zeitlichen Abstand voneinander durchzuführen. Diese Verfahrensanweisung oder auch "Rezept" kann etwa eine Vielzahl von Anweisungen für einen Schweissvorgang der Maschine(n) 6 vorgegeben, die eine Vielzahl von verschiedenen Steuerbefehlen 51 bedingen, wie etwa ein Positionieren der Sonotrode auf dem Werkstück, Beaufschlagen mit einer bestimmten Frequenz/Amplitude/Leistung/Temperatur für eine vorbestimmte Zeit, und Entfernen der Sonotrode vom Werkstück.

Zudem hat das System 101 in Fig. 1 einen teilweise automatisierten Betriebsmodus. In diesem Betriebsmodus kann das System 101 durch eine Eingabe 31 dazu konfiguriert werden selbsttätig, also ohne eine weitere Eingabe 31, einen Steuer- und/oder Ausgabebefehl 51, 52 zu generieren, um die Maschine zu steuern/zu kontrollieren, wenn eine Bedingung erfüllt ist. So kann beispielsweise durch die ursprüngliche Eingabe 31 vorgegeben werden, dass so bald ein Zustandsparameter 62, der etwa die aktuelle Temperatur definiert, einen vordefinierten Wert überschreitet, ein Steuerbefehl 51 selbsttätig generiert wird, der die Ultraschallbeaufschlagung der Maschine(n) 6 beendet. Diese Überschreitung des vordefinierten Werts kann optional bedingt sein durch einen Inhalt eines anderen Zustandsparameter, etwa einen Betriebsmodus der Maschine(n) 6.

Die Verarbeitung dieser Eingabe 31 in Fig. 1 erfolgt über das Kommunikationsmodul 4 und Sprachmodell 2 in Echtzeit, sodass die Maschine(n) 6 schnell und flexibel von dem Akteur gesteuert/kontrolliert werden können.

Das System 101 in Fig. 1 ist dazu konfiguriert, die zuvor beschriebenen Betriebs- und/oder Zustandsparameter 61, 62 nach einer service-orientierten Architektur, wie einen OPC-UA Kommunikationsstandard, abzulegen. Zudem werden diese Betriebs- und/oder Zustandsparameter 61, 62 ebenfalls über das Modell-Kontext-Protokoll an das LLM 2 ausgegeben. Somit können die Betriebs- und/oder Zustandsparameter 61, 62 über einer standardisierten service-orientierten Architektur zum einen protokolliert werden und zudem dem LLM 2 automatisiert zur Verfügung gestellt werden. Diese Betriebs- und/oder Zustandsparameter 61, 62 werden automatisiert in regelmässigen zeitlichen Abständen an das Kommunikationsmodul 4 und das LLM 2 ausgegeben und zusätzlich abgelegt. Somit kann etwa eine automatisierte Überwachung und eine zuvor beschriebene selbsttätige bedingte Steuerung/Kontrolle durch Steuer- und/oder Ausgabebefehle 51, 52 ausgelöst werden, die also ausgeführt wird, wenn eine hinterlegte Bedingung erfüllt ist.

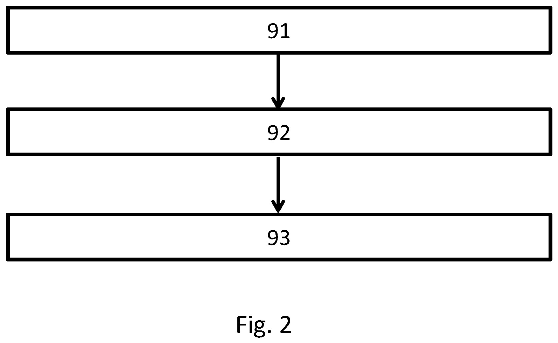

Figur 2 zeigt eine schematische Darstellung eines erfindungsgemässen Verfahrens zum Definieren von Daten für ein System, insbesondere ein zuvor beschriebenes System, zum Steuern und Kontrollieren einer industriellen Maschine/einer Vielzahl von industriellen Maschinen.

Das Verfahren umfasst, dass in einem ersten Schritt 91 eine erste Nutzereingabe von einem Akteur, also einem Nutzer oder KI-Agenten erhalten wird. Diese Nutzereingabe kann über eine Eingabeschnittstelle erfolgen, etwa über eine graphische Benutzeroberfläche durch einen Nutzer oder über eine Verbindung Der Eingabeschnittstelle zu einem KI-Agenten. Die erste Nutzereingabe in Schritt 91 umfasst eine Anweisung zum Definieren einer standardisierten Datenstruktur durch das Definieren eines Betriebs- und/oder Zustandsparameters der industriellen Maschine(n) für ein Modell-Kontext-Protokoll als Ressourcendaten. Somit können eine Vielzahl von relevanten Betriebs- und/oder Zustandsparameter der industriellen Maschine(n) in der Datenstruktur hinterlegt, um eine standardisierte Verwendung durch den Akteur/das LLM zu ermöglichen. Eine Kommunikationsschnittstelle und das LLM des Systems können somit anhand einer Eingabe in natürlicher Sprache durch Übersetzung in diese Datenstruktur kommunizieren, um zielgerichtet Steuer- und/oder Ausgabebefehle zu generieren.

In einem weiteren Schritt 92 wird eine Verarbeitungsanweisung für mindestens einen Betriebs- und/oder Zustandsparameter der industriellen Maschine als Werkzeugdaten anhand einer weiteren Nutzereingabe definiert. Diese Werkzeugdaten können etwa einen Zugriff auf eine Vielzahl von Betriebs- und/oder Zustandsparameter der industriellen Maschine ermöglichen. So kann beispielsweise, ähnlich zu einer vordefinierten Funktion, eine Übersicht von einer Vielzahl von relevanter Zustandsparameter, wie Kompressionskraft, Amplitude, und Zeit für einen Schweissprozess, als ein Statusbericht ausgegeben werden, oder eine Verfahrensanweisung für eine Vielzahl von Steuer- und/oder Ausgabebefehlen in einer vordefinierten Reihenfolge und/oder zeitlichen Abstand für einen Schweissprozess definiert werden.

In einem weiteren Schritt 93 wird eine Interaktionsaufforderung zur Bearbeitung einer oder mehrerer Betriebs-, Zustandsparameter, und/oder Werkzeugdaten der industriellen Maschine als Promptdaten durch eine weitere Nutzereingabe definiert. Somit können nutzerspezifische Interaktionen definiert werden, die die Steuerung/Kontrolle der Maschine(n) erleichtern, etwa durch ein Verknüpfen verschiedener Verarbeitungsanweisungen untereinander.

## Patentansprüche

1. System (101) zum Steuern und Kontrollieren mindestens einer industriellen Maschine (6), insbesondere mindestens einer Ultraschallbearbeitungsmaschine, bevorzugt mindestens einer Ultraschallschweissmaschine, mit Hilfe eines grossen Sprachmodells (2) umfassend:
- eine Eingabeschnittstelle (3) zum Empfangen einer Eingabe (31) in natürlicher Sprache von mindestens einem Akteur, insbesondere einem Künstlichen-Intelligenz-Agenten (8) und/oder einem Nutzer,
- ein Kommunikationsmodul (4), das für eine insbesondere bidirektionale Kommunikation mit der Eingabeschnittstelle (3) und mindestens einer Maschinensteuerung (5) verbunden oder verbindbar ist,
- wobei das Kommunikationsmodul (4) eine Verbindungsschnittstelle zu dem grossen Sprachmodell (2) umfasst und dazu konfiguriert ist, über ein Protokoll, insbesondere ein Modell-Kontext-Protokoll, auf Basis einer Eingabe (31) in natürlicher Sprache über die Eingabeschnittstelle (3):
(i) einen Steuerbefehl (51) zu generieren, der dazu konfiguriert ist, mindestens einen Betriebsparameter (61) für die Maschine (6) anzupassen und/oder
(ii) einen Ausgabebefehl (52) zu generieren, der dazu konfiguriert ist, mindestens einen Zustandsparameter (62) der Maschine (6) auszugeben und/oder zu einer Ausgabe zu verarbeiten und diese Ausgabe auszugeben.

2. System (101) nach Anspruch 1, wobei das System das grosse Sprachmodell (2) und/oder den Künstliche-Intelligenz-Agenten, der mit der Eingabeschnittstelle (3) verbunden oder verbindbar ist, umfasst.

3. System (101) nach einem der vorhergehenden Ansprüche, wobei die Eingabeschnittstelle (3), das Kommunikationsmodul (4), die Maschinensteuerung (5), und insbesondere das grosse Sprachmodell (2) und/oder der Künstliche-Intelligenz-Agent (8) lokal miteinander verbunden oder verbindbar sind, und insbesondere ausschliesslich lokalen Datenaustausch unterstützen.

4. System (101) nach einem der vorhergehenden Ansprüche, wobei das System (101) die Maschinensteuerung (5) umfasst, die mit der Maschine (6) zur Datenübertragung verbunden oder verbindbar ist, und wobei das System (101) vorzugsweise die mindestens eine Maschine (6) umfasst, insbesondere eine Vielzahl von Maschinen (6), vorzugsweise eine Vielzahl von Ultraschallbearbeitungsmaschinen.

5. System (101) nach Anspruch 4, wobei die Maschinensteuerung (5) räumlich von der Maschine (6) beabstandet angeordnet ist, insbesondere eine gemeinsame Maschinensteuerung (5), die mit einer Vielzahl von Maschinen (6) zur Datenübertragung verbunden oder verbindbar ist.

6. System (101) nach einem der vorhergehenden Ansprüche, wobei das System (101) eine Schnittstelle für eine Benutzeroberfläche (71) umfasst, die dazu konfiguriert ist, die Eingabe in natürlicher Sprache über die Eingabeschnittstelle (3), zu empfangen und/oder eine Ausgabe, insbesondere den mindestens einen Zustandsparameter (62) der industriellen Maschine (6), darzustellen und/oder auszugeben, wobei
das System (101) optional eine Anzeigevorrichtung (7) zur Darstellung der Benutzeroberfläche (71) umfasst.

7. System (101) nach einem der vorhergehenden Ansprüche, wobei das System (101) dazu konfiguriert ist, zumindest einen Betriebs- und/oder Zustandsparameter (62) nach einem Kommunikationsstandard, insbesondere einer service-orientierten Architektur, auszugeben, entgegenzunehmen, zu bearbeiten und/oder abzulegen, und optional zudem diesen Betriebs- und/oder Zustandsparameter (62) über das Protokoll, insbesondere das Modell-Kontext-Protokoll über die Verbindungsschnittstelle zum grossen Sprachmodell (2) und/oder den Künstliche-Intelligenz Agenten auszugeben.

8. System (101) nach einem der vorhergehenden Ansprüche, wobei das System (101) dazu konfiguriert ist, dass eine Vielzahl der Betriebsparameter (61) und/oder Zustandsparameter (62) zeitlich beabstandet voneinander, insbesondere regelmässig zeitlich beabstandet voneinander, automatisiert über das Protokoll, insbesondere das Modell-Kontext-Protokoll, an das grosse Sprachmodell (2) übermittelt werden, und wobei insbesondere zudem diese Vielzahl der Betriebsparameter (61) und/oder Zustandsparameter (62) nach dem Kommunikationsstandard gemäss Anspruch 6 ausgegeben, entgegengenommen, bearbeitet und/oder abgelegt werden.

9. System (101) nach einem der vorhergehenden Ansprüche, wobei das System (101) dazu konfiguriert ist, dass die Ausgabe des Zustandsparameters (62) oder eine aus dem Zustandsparameter (62) hergeleitete Ausgabe in Echtzeit erfolgt.

10. System (101) nach einem der vorhergehenden Ansprüche, wobei das System (101) einen zumindest teilweise automatisierten Betriebsmodus umfasst, der dazu konfiguriert ist, den Steuerbefehl (51) und/oder Ausgabebefehl (52), insbesondere eine Vielzahl von Steuerbefehlen (51) und/oder Ausgabebefehlen (52), selbsttätig, ohne eine Eingabe in natürlicher Sprache zu generieren, insbesondere wenn:
- der Zustandsparameter (62) einen vordefinierten Wert überschreitet und/oder unterschreitet, insbesondere in Abhängigkeit eines Inhalts eines anderen Zustandsparameters (62),
- ein Verhältnis zueinander oder eine Differenz von zwei Zustandsparametern eine stärkere oder geringere Abweichung aufweist als ein vordefinierter Referenzwert, und/oder
- eine Änderungsrate des Zustandsparameters (62) sich über einen Zeitraum stärker ändert als eine vordefinierte Änderungsgeschwindigkeit.

11. System (101) nach einem der vorhergehenden Ansprüche, wobei die Daten des Modell-Kontext-Protokolls eine Datenstruktur aufweisen, welche folgendes umfasst:
- Ressourcendaten, die den Betriebsparameter (61) und/oder den Zustandsparameter (62) mindestens einer der Maschinen (6) enthalten,
- Werkzeugdaten, die eine Verarbeitungsanweisung für mindestens einen der Betriebsparameter (61) und/oder der Zustandsparameter (62) der Maschine (6) angeben, und
- Promptdaten, die eine Interaktionsaufforderung zur Bearbeitung eines oder mehrerer Betriebsparameter (61), Zustandsparameter (62), und/oder Werkzeugdaten der mindestens einen Maschine (6) umfassen.

12. System (101) nach einem der vorhergehenden Ansprüche, wobei das System (101) eine teilweise oder vollständig identische Datenstruktur des Protokolls zur Generierung von Steuer- und/oder Ausgabebefehlen (51, 52) für eine Vielzahl von industriellen Maschinen (6) umfasst, insbesondere eine Datenstruktur nach Anspruch 11.

13. System (101) nach einem der vorhergehenden Ansprüche, wobei das System (101) dazu konfiguriert ist, eine Verfahrensanweisung auf Basis der Eingabe (31) in natürlicher Sprache durchzuführen, wobei die Verfahrensanweisung eine Vielzahl von Steuerbefehlen (51) und/oder Ausgabebefehlen (52) in einer vordefinierten Reihenfolge und/oder in einem vordefinierten zeitlichen Abstand voneinander beinhaltet.

14. System (101) nach einem der vorhergehenden Ansprüche, wobei der Betriebsparameter (61) zumindest eines der folgenden umfasst oder daraus besteht:
- einen Betriebsmodus,
- eine Verfahrensanweisung zum Durchführen von zumindest einem Steuerbefehl (51) und/oder Ausgabebefehl (52),
- eine Kompressionskraft für einen Schweissprozess,
- eine Amplitude für einen Schweissprozess,
- eine Zeit für einen Schweissprozess,
- eine aktive oder passive Verfahrensanweisungen,
- eine Losgrösse,
- eine Planzeit,
- eine Wartungsanweisung,
- eine Kundenzuordnung und/oder Produktzuordnung,
- Kundendaten,
- eine Artikelnummer,
- einen Liefertermin,
- eine Auftraggeberinformation,
- ein Zugriffsrecht des Künstliche Intelligenz Agenten,
- eine vordefinierte Rolle, insbesondere eine Berechtigungsstufe und/oder Funktionszuweisung des Akteurs,
- eine Einschränkung, insbesondere einen Begrenzungswert des Zustandsparameters (62),
- einen Token, insbesondere einen Auth-Token,
- einen globalen Steuer- und/oder Ausgabebefehl für eine Vielzahl von Maschinen (6),
- eine Frequenz, Leistung, Temperatur, und/oder Position, und/oder
- eine Kommunikation mit einem Produktionsleitsystem, einem EPR System, einer externen Datenplattform, und/oder einem Datenabgleichstatus.

15. System (101) nach einem der vorhergehenden Ansprüche, wobei der Zustandsparameter (62) zumindest einen der folgenden umfasst oder daraus besteht:
- einen Betriebsmodus,
- eine Laufzeit der Maschine (6),
- einen Fehlerstatus,
- eine Kompressionskraft für einen Schweissprozess,
- eine Amplitude für einen Schweissprozess,
- eine Zeit für einen Schweissprozess,
- einen Produktionsbericht,
- eine Gutteilzahl oder Ausschusszahl,
- eine Logdatei,
- eine Gesamtanlageneffektivität,
- einen Servicestatus,
- Kalibrierdaten,
- einen Versionsstand,
- einen Auftragsfortschritt,
- eine Seriennummer,
- eine Parameterhistorie,
- einen Qualitätsstatus,
- einen Ausschussgrund,
- eine Gutteilerfassung,
- Trenddaten zur Prozessqualität,
- eine Maschinenpark-Übersicht,
- eine Statusverteilung,
- eine aktuelle Frequenz, Leistung, Temperatur, und/oder Position,
- einen Vergleich mit einer vorhergehenden Verfahrensanweisung,
- eine Änderungsdokumentation,
- einen Datenabgleichstatus.
- eine Losgrösse,
- eine Planzeit,
- einen anstehenden Wartungstermin,
- eine Arbeitsanweisungscheckliste,
- eine Bedienungsanleitung,
- ein Schulungsvideo,
- eine Komponentendokumentation,
- eine Kundenzuordnung und/oder Produktzuordnung
- Kundendaten,
- eine Artikelnummer,
- einen Liefertermin,
- eine Auftraggeberinformation,
- ein Zugriffsrecht des Künstliche Intelligenz Agenten,
- eine vordefinierte Rolle, insbesondere eine Berechtigungsstufe und/oder Funktionszuweisung des Akteurs, und/oder
- eine Einschränkung.

16. Verfahren zum Betrieb eines Systems (101), insbesondere eines Systems (101) nach einem der vorhergehenden Ansprüche, zum Steuern und Kontrollieren mindestens einer industriellen Maschine (6), insbesondere mindestens einer Ultraschallbearbeitungsmaschine, bevorzugt mindestens einer Ultraschallschweissmaschine, mit Hilfe eines grossen Sprachmodells (2), umfassend die Schritte:
- Empfangen einer Eingabe (31) in natürlicher Sprache von mindestens einem Akteur, insbesondere einem Künstlichen-Intelligenz-Agenten (8) und/oder einem Nutzer, und
- Generieren eines (i) Steuerbefehls (51), um einen Betriebsparameter (61) für die Maschine (6) anzupassen und/oder eines (ii) Ausgabebefehls (52), um mindestens einen Zustandsparameter (62) der Maschine (6) auszugeben und/oder zu einer Ausgabe zu verarbeiten,
durch Verarbeitung der Eingabe über ein Protokoll, insbesondere ein Modell-Kontext-Protokoll, und ein grosses Sprachmodell (2),
- Ausgabe des Steuerbefehls (51), insbesondere an eine Maschinensteuerung (5), und/oder des Ausgabebefehls (52), insbesondere über eine Benutzeroberfläche (71).

17. Verfahren zum Definieren von Daten für ein System (101) zum Steuern und Kontrollieren mindestens einer industriellen Maschine (6), insbesondere nach einem der vorhergehenden Ansprüche, insbesondere einer Vielzahl von industriellen Maschinen (6), wobei die Datenstruktur eines Modell-Kontext-Protokolls durch eine Nutzereingabe, insbesondere über eine Eingabeschnittstelle (3), definiert wird, umfassend das Definieren:
- eines Betriebs- und/oder Zustandsparameters (62) der Maschine (6) als Ressourcendaten,
- einer Verarbeitungsanweisung für mindestens einen der Betriebsparameter (61) und/oder der Zustandsparameter (62) der Maschine (6) als Werkzeugdaten, und
- einer Interaktionsaufforderung zur Bearbeitung einer oder mehrerer Betriebsparameter (61), Zustandsparameter (62), und/oder Werkzeugdaten der mindestens einen industriellen Maschine (6) als Promptdaten.
